# FASCICULE DE BREVET EUROPEEN

(11) **EP 0 835 609 B1**
(45) Date de publication et mention de la délivrance du brevet: **23.06.2004**
(21) Numéro de dépôt: 97202935.9
(22) Date de dépôt: 25.09.1997
(51) Int. Cl.: A23C 9/144, A23C 9/146, B01D 61/48

(54) **Déminéralisation du lactosérum doux de fromagerie**
Entmineralisierung von Käserei-Süssmolke
Demineralisation of sweet cheese whey

(30) Priorité: 09.10.1996 EP 96202810
(43) Date de publication de la demande: 15.04.1998
(73) Titulaire: SOCIETE DES PRODUITS NESTLE S.A., 1800 Vevey (CH)
(72) Inventeur: Berrocal, Rafael, 1806 St-Légier (CH); Chaveron, Michel, 1814 La Tour-de-Peilz (CH)
(74) Mandataire: Archambault, Jean

(56) Documents cités:
- EP-A- 0 170 895
- EP-A- 0 417 506
- WO-A-95/29005
- FR-A- 1 193 630
- FR-A- 2 391 653
- US-A- 3 645 884
- US-A- 5 066 375
- US-A- 5 084 285
- US-A- 5 120 416
- PATENT ABSTRACTS OF JAPAN vol. 007, no. 083 (C-160), 6 avril 1983 & JP 58 011004 A (TOKUYAMA SODA KK), 21 janvier 1983,
- R. DELANAY: "Demineralisation of whey" AUSTRALIAN JOURNAL OF DAIRY TECHNOLOGY, vol. 3, no. 1, 1976, HIGHETT VIC AU, pages 12-17, XP002027447

## Description

L'invention se rapporte au domaine de la déminéralisation du lactosérum doux de fromagerie.

Le lactosérum déminéralisé, liquide ou en poudre, constitue le principal composant des produits infantiles et diététiques, en particulier des laits adaptés au lait maternel. Le lactosérum déminéralisé a également d'autres applications, par exemple comme ingrédient de remplacement du lait écrémé en confiserie-chocolaterie ou dans la fabrication des laits reconstitués.

Les procédés connus de déminéralisation du lactosérum les plus efficaces sont lélectrodialyse et léchange dions, qui sont appliqués séparément ou en combinaison. Dans lélectrodialyse, les sels ionisés en solution dans le lactosérum migrent sous leffet d'un champ électrique à travers des membranes sélectivement perméables aux cations et aux anions et sont éliminés sous forme de saumure. Dans léchange d'ions, on utilise l'équilibre ionique entre une résine en tant que phase solide et le lactosérum à déminéraliser en tant que phase liquide, les ions étant adsorbés sur la résine de même nature lors de la phase de saturation, puis les résines ensuite régénérées.

Pour des motifs de productivité, ces deux techniques sont avantageusement combinées dans un procédé en deux étapes, lélectrodialyse assurant une première déminéralisation à environ 50-60 % et léchange dions, de préférence multi-étages avec des résines successives cationique faible et cationique forte, réalisant la déminéralisation de finition à environ 90-95 %, comme c'est décrit par exemple dans US-A-4803089.

Ces procédés ont les inconvénients que l'étape d'échange d'ions nécéssite de grandes quantités de régénérants chimiques et consomme beaucoup d'eau et que l'électrodialyse ne peut pas être utilisée au delà d'un taux de déminéralisation > à 60 % à cause de sa grande demande en énergie électrique.

L'électrodéionisation, faisant l'objet par exemple de US-A-4632745 ou de US-A-5120416, réalise la déionisation en continu dans le traitement de l'eau en combinant lélectrodialyse et l'échange dions dans un seul module, ce qui présente les avantages de consommations faibles d'eau et d'énergie et élimine la nécessité de régénérer chimiquement les résines.

Cette technique consiste à faire circuler l'eau à déminéraliser à travers un ensemble de cellules en parallèle délimitées par des membranes semi-perméables cationique et anionique et contenant un mélange de billes de résine, dénommés compartiments de dilution, ces compartiments de dilution étant séparés les uns des autres et leur ensemble étant séparé de l'extérieur par des espaceurs, formant des compartiments dits de concentration, délimités par des membranes semi-perméables anionique et cationique, le tout étant placé entre un compartiment cathodique et un compartiment anodique sous tension. On fait circuler de l'eau de lavage dans les espaces de concentration, ce qui permet d'éliminer sous forme d'effluent les ions qui s'y concentrent du fait de leur polarité, en migrant à travers les membranes sous l'effet du champ électrique depuis les compartiments de dilution vers les compartiments de concentration.

A la différence de l'électrodialyse, les billes de résine chargées en ions adsorbés maintiennent une conductivité électrique satisfaisante dans les compartiments de dilution tout au long du processus de déminéralisation. De plus, il n'est pas nécessaire de les régénérer, puisque les sites saturés en cations et en anions sont échangés au fur et à mesure contre des ions H⁺ et OH⁻ sous l'effet du champ électrique.

Dans le procédé selon US-A-4632745, les billes de résine sont incorporées de manière fixe dans les compartiments de dilution alors que dans le procédé selon US-A-5120416, les billes sont mobiles et il est possible de les introduire dans les compartiments de dilution et de les en extraire par circulation sous forme de suspension. Dans ces procédés connus appliqués à l'eau, les résines se présentent en lit mélangé de billes de type cationique forte et anionique forte.

WO 95 29005, concerne un module d'électrodéionisation et un procédé de désalinisation de liquides utilisant un tel module. Le procédé décrit le traitement de substrats d'origine lactique est aux pages 36-39, exemple 6. Dans cet exemple (p. 36,1. 23-26), les compartiments de dilution sont remplis avec un lit mélangé de résines dans une proportion égale en terme d'équivalent, cationique forte, ou fortement acide (avec des groupes actifs de l'échangeur de cation sulfoniques) et anionique forte, ou fortement basique (avec des groupes actifs de l'échangeur d'anion amines quaternaires). Le produit traité est un lactosérum doux provenant de la fabrication de cheddar (p. 37,1. 4-6).
Dans le même exemple, il est indiqué de façon générale et sans indication des résultats obtenus que d'autres produits laitiers peuvent être traités, par exemple un lactosérum doux non préconcentré (p. 38,1. 26). En l'absence d'indication contraire, on doit assumer que les compartiments de dilution ("filled cell ED") ou les compartiments de dilution et de concentration ("filled cell EDR") sont remplis avec le même lit mélangé de résines, soit comme indiqué ci-dessus des résines cationique forte et anionique forte en proportion égale en terme d'équivalent.

FR-A-2 391 653, concerne un procédé de déminéralisation de lactosérum doux de fromagerie ou de lactosérum acide de caséinerie par jumelage des opérations classiques d'électrodialyse et d'échange d'ions ainsi que l'utilisation des substrats déminéralisés dans les aliments, en particulier les formules infantiles.

US-A-5 084 285 a trait à un procédé de déminéralisation de diverses matières premières lactiques consistant traiter la matière première successivement par électrodialyse, par échange d'ions sur une résine cationique, puis par échange d'ions sur une résine anionique, cette dernière étape étant précédée par une addition en boucle soit d'une partie de la matière première, soit d'une partie de cette dernière après électrodialyse de manière à ajuster le pH du liquide destiné à l'échange anionique final.

L'invention concerne un procédé de déminéralisation de lactosérum doux de fromagerie, caractérisé par le fait que l'on électrodéionise un lactosérum doux de fromagerie ou un concentré d'un tel lactosérum dans un appareil, dont les compartiments de dilution ou les compartiments de concentration et de dilution contiennent des billes de résines constituées de résine cationique seule ou d'un mélange de résine cationique et de résine anionique faible et que l'on règle le pH des compartiments de concentration à une valeur inférieure à 5.

Dans le cadre de l'invention, on désigne par lactosérum doux de fromagerie le liquide obtenu après coagulation de la caséine par la présure lors de la fabrication de fromage. La matière première peut être brute, concentrée ou encore reconstituée dans un milieu aqueux à partir de poudre.

On peut utiliser comme résine tout matériau habituellement utilisé dans l'échange d'ions, par exemple macroréticulé, sous forme de gel ou macroporeux, pour autant que ce matériau ait la rigidité compatible avec le confinement en cellules et ne fixe pas les protéines par absorption ou adsorption. On peut utiliser un mélange de résine cationique et de réine anionique faible. Comme résine cationique, on peut mettre en oeuvre une résine cationique faible ou forte ou encore un mélange de ces résines. Une résine cationique faible a généralement une forte capacité d'adsorption et un gonflement relativement important. Une résine cationique forte a une capacité d'adsorption plus faible et un gonflement limité.

Selon un mode de réalisation du procédé, on met en oeuvre lélectrodéionisation avec des billes de résine cationique forte seule dans les compartiments de dilution. Avec ce mode de réalisation, nous avons constaté que la déminéralisation des anions que l'on désire éliminer, essentiellement Cl⁻ et citrates, aussi bien que celle des cations, essentiellement K⁺, Na⁺, Ca⁺⁺ et Mg⁺⁺, s'effectuait de manière satisfaisante sans pertes notoires de protéines, avec l'avantage d'une meilleure qualité microbiologique à température d'environ 30° C, dû au travail conduisant à un pH final bas, de l'ordre de 3 à 4. Par ailleurs, l'azote non protéique diminuait, ce qui augmentait la teneur en protéines vraies, recherchées en particulier dans les produits infantiles et par la même occasion modifiait l'aminogramme du produit.

Selon une variante, l'on met en oeuvre l'électrodéionisation avec des billes de résine cationique forte et anionique faible en lit mélangé ou stratifié dans les compartiments de dilution, ou à la fois dans les compartiments de dilution et de - concentration, de préférence dans les proportions pondérales-résine cationique forte / résine anionique faible de 30-40 % / 70-60 %. La résine cationique forte est de préférence sous forme H⁺ et la résine anionique faible de préférence sous forme OH⁻.

Nous avons constaté que, lorsque les compartiments de concentration étaient remplis avec un lit mélangé ou lorsque ces compartiments étaient vides, le pH augmentait au cours de la déminéralisation. Ce fait, combiné avec l'augmentation de la concentration en calcium et en phosphore provenant des compartiments de dilution, entraînait au cours du temps une chute régulière du débit et une augmentation de la pression dans ce compartiment, due probablement à la précipitation des phosphates de calcium. Il est indispensable de palier ce phénomène en évitant que le pH ne dépasse 5 dans ces compartiments. Pour ce faire, on ajoute une solution aqueuse d'acide, par exemple d'HCl, de préférence au moyen d'un pH-stat.

Cette mesure n'est pas nécessaire lorsque les compartiments de concentration sont remplis avec de la résine cationique seule, qui joue alors le rôle d'abaisser le pH en libérant continuellement de ions H+.

On a également observé que la conductivité diminuait dans les compartiments d'électrodes au cours de la déminéralisation. Lorsque la conductivité devient trop basse dans ces compartiments, il y a un ralentissement , voire un arrêt de la déminéralisation. Pour l'éviter, on ajoute un acide en continu, par exemple une solution aqueuse d'acide sulfurique, de manière à maintenir la conductivité à une valeur compatible avec une déminéralisation performante, par exemple à une valeur > 5-20 mS.

Lorsque l'on désire une désanionisation poussée, il est préférable d'augmenter le pH du substrat, soit au début du processus de déminéralisation, soit lorsque le taux de déminéralisation a atteint environ 70 %, à une valeur d'environ 7,5-8, par alcalinisation, par exemple par une base forte telle que KOH. On peut en variante ajouter de l'hydroxyde de Ca et le cas échéant chauffer, par exemple à environ 45° C/20 min., puis éliminer le précipité former. Une autre variante de cette désanionisation consiste à faire passer le substrat, par exemple déminéralisé à environ 80 %, à travers une colonne de résine anionique faible.

Le procédé selon l'invention peut être mis en oeuvre en mode continu, auquel cas le substrat d'une part peut être dirigé vers le compartiment de dilution du module, puis évacué de ce compartiment au fur à mesure sous forme de produit déminéralisé et d'autre part le flux de lavage peut être dirigé vers le compartiment de concentration et, selon les versions, la saumure ou l'acide chlorhydrique dilué en être évacuée au fur et à mesure.

Dans une variante de mise en oeuvre, en mode discontinu ou par charges, le substrat peut être recirculé en boucle à travers le compartiment de dilution et la saumure recirculée en boucle à travers le compartiment de concentration, jusquà ce que l'on atteigne le taux de déminéralisation recherché. Après déminéralisation, le réactant obtenu peut être le cas échéant neutralisé par addition d'un alcali, de préférence de qualité alimentaire, puis séché, par exemple par pulvérisation dans une tour de séchage.

Le produit obtenu par la mise en oeuvre du procédé selon l'invention, qu'il soit liquide ou en poudre, peut servir d'ingrédient dans la fabrication d'un aliment destine à l'alimentation humaine ou animale.

Il peut notamment être utilisé pour fabriquer des lactoprotéines, c'est à dire un produit en partie délactosé contenant notamment environ 30 à 40 % en poids de protéines et environ 45 à 55 % en poids de lactose ou un produit lactosérique déminéralisé contenant notamment environ 9 à 15 % en poids de protéines et environ 75 à 85 % en poids de lactose.

Il peut être utilisé en remplacement du lait ou du lactosérum comme ingrédient de la fabrication de produits de confiserie-chocolaterie ou de confiserie glacée et en particulier en tant que rempaceur de lactosérum dans la fabrication des produits infantiles, notamment de laits adaptés au lait maternel.

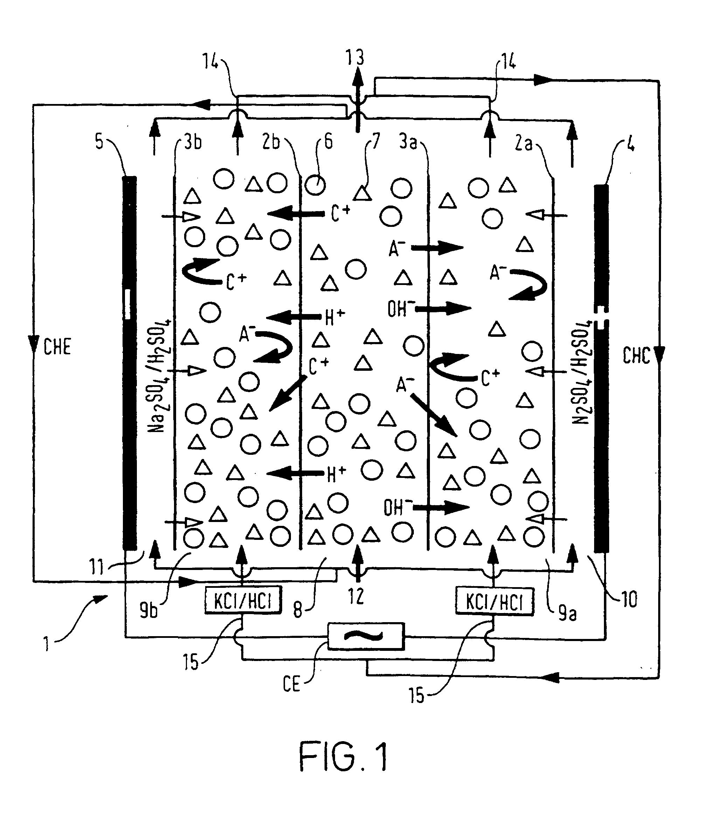

Le procédé selon l'invention sera décrit plus en détail par référence au dessin annexé dont la figure 1 représente schématiquement un appareil simplifié d'électrodéionisation. Par simplification, une seule séquence de cellules alternées y est représentée alors qu'en réalité un module comporte plusieurs séquences de cellules alternées agencées en parallèle.

A la figure 1, le module 1 comprend en alternance des membranes polymères semi-perméables 2a, 2b, perméables aux cations et imperméables aux anions, chargées négativement, par exemple par des groupes sulfoniques et 3a, 3b, perméables aux anions et imperméables aux cations, chargées positivement, par exemple portant des groupes ammonium quaternaires entre des électrodes, une anode 4 et une cathode 5.

Les membranes 2b et 3a délimitent une cellule remplie de billes de résine, par exemple cationique forte 6 et anionique faible 7, en lits mélangés, constituant un compartiment de dilution 8 entouré de deux espaceurs délimités respectivement par les membranes 2a, 3a et 2b, 3b, remplis de bille de résine ou exempts de résine, formant les compartiments de concentration 9a, 9b. Les compartiments anodique 10 et cathodique 11 entourent les compartiments de concentration 9a, 9b situés aux extrémités du module.

L'appareil fonctionne de la manière suivante:

Le flux de substrat à déminéraliser 12 traverse le compartiment de dilution 8 dans lequel il est débarrassé de ses cations tels que C⁺ adsorbés par la résine cationique forte et de ses anions tels que A⁻ adsorbés par la résine anionique faible.

Sous l'effet du champ électrique, CE créé entre les électrodes, les anions se dirigent vers l'anode 4, traversent la membrane 3a et sont repoussés par la membrane 2a. Parallélement, les cations se dirigent vers la cathode 5, traversent la membrane 2b et sont renvoyés par la membrane 3b. Il en résulte un appauvrissement du substrat 12 en ions, qui est évacué sous forme de flux de réactant déminéralisé 13 et un enrichissement en ions du flux de solution de lavage 15 entrant dans les compartiments de concentration 9a, 9b qui en est évacué sous forme de flux de saumure 14. Ces flux constituent le circuit hydraulique des compartiments de concentration, CHC.

De manière concommitante, des cations passent du compartiment anodique 10 vers le compartiment de concentration 9a à travers la membrane 2a et sont repoussés au niveau de la membrane 3a, cependant que des ions H⁺ migrent à travers tout le module et régénèrent les billes de résine cationique forte. Parallèlement, des anions passent du compartiment cathodique 11 vers le compartiment de concentration 9b à travers la membrane 3b et sont repoussés au niveau de la membrane 2b, cependant que des ions OH⁻ migrent à travers tout le module et régénèrent les billes de résine anionique faible. Il se produit en somme une électrolyse de l'eau fournissant les ions de régénération. Les flux circulant dans les compartiments anodique et cathodique et de l'un à l'autre constituent le circuit hydraulique des compartiments des électrodes, CHE.

Les exemples ci-après illustrent l'invention.

Dans ceux-ci,
- les pourcentages et parties sont pondéraux, sauf indication contraire,
- préalablement à leur traitement, les matières premières reconstituées à partir de poudres ont été centrigugées à 2000 g ou filtrées, de manière à les débarasser des particules solides susceptibles de colmater le module,
- les valeurs analytiques ont été obtenues par les méthodes suivantes:
   - contenu en protéines vraies: calculé à partir des mesures par la méthode de Kjeldhal de l'azote total (TN) et de l'azote non protéique (NPN), soit comme (TN-NPN) x 6,38,
   - cendres: déterminées par calcination à 550° C,
   - teneurs en cations (Ca⁺⁺, Mg⁺⁺, Na⁺, K⁺) et en phosphore: mesurées par spectroscopie atomique d'absorption (ASS),
   - teneurs en citrate et lactate: déterminées par méthodes enzymatiques (Boehringer Mannheim, 1984),
   - teneur en CI⁻: mesurée par titration potentiométrique avec AgNO₃ avec une électrode d'argent.

### Exemples 1-2

On rinse abondamment les modules, dont les compartiments de dilution et de concentration sont remplis avec des billes de résine spécifiée avec de l'eau distillée et on remplit les différents compartiments de la manière suivante:
- les compartiments d'électrodes avec 4 l d'une solution aqueuse de Na₂SO₄ à 7 g/l dont le pH est ajusté à 2 avec du H₂SO₄,
- les compartiments de concentration avec 4 l d'une solution aqueuse de 2,5 g/l de NaCl,
- les compartiments de dilution avec 2,5 ou 8 kg du substrat à déminéraliser.

Après 10 min de recirculation pour stabiliser la pression des différents compartiments, on prend 400 ml du substrat du compartiment de dilution, on le pèse et on le réserve pour analyse. On fixe la tension à la valeur maximum de 28 V, le courant électrique commence à circuler entre les électrodes et la déminéralisation débute. On contrôle continuellement la conductivité, la température et le pH dans les différents compartiments et on poursuit la déminéralisation jusqu'à une diminution de la conductivité de 90-95 % par rapport à la conductivité du substrat de départ.

La déminéralisation a lieu en discontinu, par charges, c'est à dire en faisant recirculer le substrat à travers le module jusqu'à ce que la totalité du volume de la charge ait atteint la conductivité fixée comme objectif.

Dans les exemples comportant une charge traitée de 8 kg, on maintient la conductivité du compartiment de concentration (fournissant le flux de collecte des ions) à une valeur < 30 mS (milli Siemens) en remplaçant la moitié de la solution par de l'eau distillée lorsque cette valeur de conductivité est atteinte.

A la fin du processus de déminéralisation, c'est à dire lorsque le taux de déminéralisation choisi à priori, qui n'est pas le taux de déminéralisation maximum possible, est atteint, on coupe le courant, on recueille le volume total de réactant déminéralisé, soit le perméat, on le pèse et on le sèche par lyophilisation. On procède de même avec la saumure du compartiment de concentration ou rétentat et avec les solutions des compartiments d'électrodes.

Enfin, on rinse le module plusieurs fois à l'eau distillée ou, si nécessaire, on le lave avec une solution contenant 2,5 % NaCl/1 % NaOH ou avec une solution de 5 % NaCl/1 % de percarbonate de Na, on le rince à l'eau distillée et on le maintient rempli d'eau entre les charges.

Les conditions d'opération et les résultats obtenus sont indiqués dans le tableau 1 ci-après.

**Tableau 1**

| **Exemple** | **1** | **2** |
|---|---|---|
| Type de résine, mélange cationique forte % /anionique faible % | HP111(forme H⁺)/HP661(forme OH⁻), Rohm & Haas, 40/60 | HP111(forme H⁺)/HP661(forme OH⁻), Rohm & Haas, 40/60, lactosérum doux, préconcentré par évaporation |
| Lactosérum doux, matière, sèche (%) | 6,7 | 18,2 |
| Débit (l/min) | 0,7 | 0,7 |
| Durée du traitement (min) | 35 | 94 |
| pH final | 4,1 | 5,35 |
| Taux de déminéralisation (%) | 91,76 | 87,13 |
| TN perdu en % de l'initial | 11,51 | 8,96 |
| Protéine vraie perdue en % de l'initial | 6,39 | 5,24 |

A titre de comparaison, lorsque l'on utilise le module sans résine dans les compartiments, avec un lactosérum doux à 6, 7 % de matière sèche et des débits de 0,7 et 1,4 l/min respectivement, il faut des temps considérablement plus longs, 110 min et 140 min respectivement pour obtenir un taux de déminéralisation de 84,6 % et 82,1 % respectivement.

De plus, lorsque l'on utilise le module avec des résines standard cationique forte/anionique forte en lit mélangé avec des débits de lactosérum allant de 0,7 à 1,4 l/min, avec des teneurs en matière sèche allant de 6,7 à 19,8 % pendant 28 à 70 min, on obtient des taux de déminéralisation de 85 à 91%, mais avec des pertes en protéines vraies se situant entre 7,6 et 9,3 %.

### Exemple 3

On procède comme aux exemples 1 et 2 à la déminéralisation d'un lactosérum doux de fromagerie, mais qui a été préalablement concentré par nanofiltration sur module DDS ®, avec plateau et cadre équipé de membranes APV HC50 ®, à une pression d'environ 35 bar, jusqu'à un taux de 19,8 %. Les conditions d'opération et les résultats obtenus sont indiqués dans le tableau 2 ci-après.

**Tableau 2**

| Type de résine, mélange cationique forte % /anionique faible % | HP111(forme H⁺)/HP661(forme OH⁻), Rohm & Haas, 40/60, lactosérum doux, préconcentré par nanofiltration |
|---|---|
| Lactosérum doux, matière, sèche (%) | 19,8 |
| Débit (l/min) | 1,4 |
| Durée du traitement (min) | 120 |
| pH final | 4,98 |
| Taux de déminéralisation (%) | 91,79 |
| TN perdu en % de l'initial | 9,85 |
| Protéine vraie perdue en % de l'initial | 5,21 |

### Exemples 4-5

On procède comme aux exemples 1 à 3, mais en ne remplissant le compartiment de dilution qu'avec un seul type de résine, cationique forte HP111, Rohm & Haas, sous forme H⁺. De plus, on remplit les différents compartiments de la manière suivante:
- les compartiments d'électrodes avec 4 l d'une solution aqueuse de H₂SO₄, 0,025 M,
- les compartiments de concentration avec 4 l d'une solution aqueuse de HCl, 0,015 M,
- les compartiments de dilution avec 5 ou 8 kg du substrat à déminéraliser.

Les conditions de traitement ainsi que les résultats sont indiqués dans le tableau 3 ci-après.

**Tableau 3**

| **Exemple** | **4** | **5** |
|---|---|---|
| Lactosérum doux, matière sèche (%) | 6,7 | 6,7 |
| Durée du traitement (min) | 28 | 25 |
| Débit (l/min) | 0,7 | 1,4 |
| pH final | 3,06 | 3,69 |
| Taux de déminéralisation (%) | 95,02 | 83,88 |
| TN perdu en % de l'initial | 8,45 | 2,14 |
| Protéine vraie perdue en % de l'initial | 1,27 | - 2,27 |
| Légende: - veut dire qu'une partie de l'azote non protéique disparait du substrat lors du traitement, ce qui explique une perte négative et donc un gain en protéine vraie. | | |

A titre de comparaison, lorsque l'on utilise le module sans résine dans le compartiment de dilution, avec un lactosérum doux à 6, 7 % de matière sèche et des débits de 0,7 et 1, 4 l/min respectivement, il faut des temps considérablement plus longs, 110 min et 140 min respectivement pour obtenir un taux de déminéralisation de 84,6 % et 82,1 % respectivement.

De plus, lorsque lon utilise le module avec des résines standard cationique forte/anionique forte en lit mélangé avec des débits de lactosérum allant de 0,7 à 1,4 l/min, avec des teneurs en matière sèche allant de 6,7 à 19,8 % pendant 28 à 70 min, on obtient des taux de déminéralisation de 85 à 91%, mais avec des pertes en protéines vraies se situant entre 7,6 et 9,3 %.

### Exemple 6

On procède comme à l'exemple 2 à la déminéralisation d'un lactosérum doux de fromagerie préconcentré, mais en remplissant le compartiment de dilution avec un mélange de 40/60 % de résine cationique forte, HP 111 (forme H+)/résine anionique faible, HP 661 (forme OH-), Rohm & Haas et en laissant vide le compartiment de concentration.

Au bout d'environ 30-40 min., le pH dans le compartiment de concentration a augmenté jusqu'à une valeur proche de 5, et on constate une diminution régulière du débit et une augmentation de la pression dans ce compartiment. On maintient alors de pH en dessous de 5 par compensation automatique en ajoutant une solution aqueuse à 30 % de HCl, par exemple au moyen d'un pH-stat.

On constate également une diminution de la conductivité dans les compartiments d'électrodes, que l'on maintient à 5-20 mS en ajoutant continuellement une solution aqueuse d'acide sulfurique.

### Exemple 7

On procède comme à l'exemple 2 à la déminéralisation d'un lactosérum doux de fromagerie préconcentré, mais en remplissant le compartiment de dilution avec un mélange de 40/60 % de résine cationique forte, HP 111 (forme H+)/résine anionique faible, HP 661 (forme OH-), Rohm & Haas et le compartiment de concentration avec la résine cationique forte, HP 111 (forme H+). Dans ces conditions, c'est la résine forte qui maintient le pH dans le domaine acide.

D'autre part, on maintient la conductivité dans les compartiments d'électrodes à 5-20 mS en ajoutant continuellement une solution aqueuse d'acide sulfurique.

### Exemple 8

On procède comme à l'exemple 6, mis à part le fait que, une fois atteint le niveau de 75 % de déminéralisation, l'on ajuste le pH du substrat entrant dans l'appareil à 7,5-8 par addition d'une solution aqueuse de KOH, et on maintient le pH à cette valeur jusqu'à un niveau de déminéralisation de 90 %. On obtient ainsi une réduction sensible de la quantité d'anions présente dans le lactosérum liquide final, en comparaison avec ce qui est obtenu sans ajustement préalable du pH, comme celà ressort du tableau 4 ci-après.

**Tableau 4**

| Anions au départ (g/kg) | Anions au départ (eq./kg) | Anions à la fin sans ajustement préalable du pH (g/kg) | Anions à la fin sans ajustement préalable du pH (eq./kg) | Anions à la fin avec ajustement préalable du pH à 7,5 (g/kg) | Anions à la fin avec ajustement préalable du pH à 7,5 (eq./kg) |
|---|---|---|---|---|---|
| 2,86 | 0,085 | 0,454 | 0,014 | 0,3 | 0,009 |

## Revendications

1. Procédé de déminéralisation de lactosérum doux de fromagerie, **caractérisé par le fait que** l'on électrodéionise un lactosérum doux de fromagerie, ou un concentré d'un tel lactosérum, dans un appareil dont les compartiments de dilution ou les compartiments de dilution et de concentration contiennent des billes de résines constituées de résine cationique forte seule ou d'un mélange de résine cationique et de résine anionique faible et que l'on règle le pH des compartiments de concentration à une valeur inférieure à 5.

2. Procédé selon la revendication 1, **caractérisé par le fait que** l'on met en oeuvre l'électrodéionisation avec des billes de résine cationique forte seule dans les compartiments de dilution.

3. Procédé selon la revendication 1, **caractérisé par le fait que** lon met en oeuvre lélectrodéionisation avec des billes de résine cationique forte et anionique faible en lit mélangé ou stratifié dans les compartiments de dilution seulement ou dans les compartiments de dilution et de concentration, et que les proportions pondérales résine cationique forte/résine anionique faible sont 30-40 % / 70-60 %.

4. Procédé selon la revendication 1, **caractérisé par le fait que** la résine cationique forte est sous forme H⁺ et la résine anionique faible sous forme OH⁻.

5. Procédé selon l'une des revendications 1 à 4, **caractérisé par le fait que** l'on maintient la conductivité des compartiments d'électrodes à au moins 5 mS.

6. Procédé selon l'une des revendications 1 à 5, **caractérisé par le fait que** l'on ajuste le pH du substrat entrant ou de ce substrat une fois atteint un taux de déminéralisation d'environ 70 %, à une valeur de 7,5-8.

7. Procédé selon l'une des revendications 1 à 6, **caractérisé par le fait qu'**après déminéralisation, l'on neutralise et l'on sèche le réactant.

## Patentansprüche

1. Verfahren zur Entmineralisierung von Käserei-Süßmolke, **dadurch gekennzeichnet, daß** man Käserei-Süßmolke oder ein Konzentrat einer solchen Molke in einer Vorrichtung elektrodeionisiert, deren Verdünnungskammern oder deren Verdünnungs- und Konzentrationskammern Kugeln aus Harzen enthalten, die nur aus stark kationischem Harz oder aus einer Mischung von kationischem Harz und schwach anionischem Harz bestehen, und daß man den pH-Wert der Konzentrationskammern auf einen Wert unter 5 einstellt.

2. Verfahren nach Anspruch 1, **dadurch gekennzeichnet, daß** man die Elektrodeionisation in den Verdünnungskammern mit Kugeln nur aus stark kationischem Harz durchführt.

3. Verfahren nach Anspruch 1, **dadurch gekennzeichnet, daß** man die Elektrodeionisation mit Kugeln aus stark kationischem und schwach anionischem Harz in einem Misch- oder Schichtbett nur in den Verdünnungskammern oder in den Verdünnungs- und Konzentrationskammern durchführt und daß die Gewichtsverhältnisse von stark kationischem Harz zu schwach anionischem Harz 30-40%/70-60% betragen.

4. Verfahren nach Anspruch 1, **dadurch gekennzeichnet, daß** das stark kationische Harz in H⁺-Form und das schwach anionische Harz in OH⁻-Form vorliegt.

5. Verfahren nach einem der Ansprüche 1 bis 4, **dadurch gekennzeichnet, daß** man die Leitfähigkeit der Elektrodenkammern auf mindestens 5 mS hält.

6. Verfahren nach einem der Ansprüche 1 bis 5, **dadurch gekennzeichnet, daß** man den pH-Wert des eintretenden Substrats oder dieses Substrats nach Erreichen eines Entmineralisierungsgrads von etwa 70% auf einen Wert von 7,5-8 einstellt.

7. Verfahren nach einem der Ansprüche 1 bis 6, **dadurch gekennzeichnet, daß** man nach der Entmineralisierung den Reaktand neutralisiert und trocknet.

## Claims

1. Process for the demineralization of sweet cheese-making whey, **characterized in that** a sweet cheese-making whey, or a concentrate of such a whey, is electrodeionized in an apparatus of which the dilution compartments or the dilution and concentration compartments contain resin beads consisting of a strongly cationic resin alone or a mixture of a cationic resin and a weakly anionic resin and **in that** the pH of the concentration compartments is adjusted to a value of less than 5.

2. Process according to claim 1, **characterized in that** electrodeionization is carried out with strongly cationic resin beads alone in the dilution compartments.

3. Process according to claim 1, **characterized in that** electrodeionization is carried out with beads of strongly cationic and weakly anionic resin in a mixed or layered bed in the dilution compartments alone or in the dilution and concentration compartments, and that the weight proportions of strongly cationic resin/weakly anionic resin are 30-40 %/70-60 %.

4. Process according to claim 1, **characterized in that** the strongly cationic resin is in the H⁺ form and the weakly anionic resin is in the OH⁻ form.

5. Process according to one of claims 1 to 4, **characterized in that** the conductivity of the electrode compartments is maintained at less than 5 mS.

6. Process according to one of claims 1 to 5, **characterized in that** the pH of the substrate is adjusted as it enters or once a degree of demineralization of approximately 70 % is reached, to a value of 7.5-8.

7. Process according to one of claims 1 to 6, **characterized in that**, after demineralization, the reactant is neutralized and dried.
